# DEMANDE DE BREVET EUROPEEN

(11) **EP 3 082 203 A1**
(43) Date de publication de la demande: **19.10.2016**
(21) Numéro de dépôt: 16165587.3
(22) Date de dépôt: 15.04.2016
(51) Int. Cl.: H01S 3/067, H01S 3/094, H01S 3/00, G02F 1/39, H01S 3/102, H01S 3/16

(54) **SYSTEME D'EMISSION LASER IMPULSIONNELLE ACCORDABLE**

(30) Priorité: 17.04.2015 FR 1500803
(71) Demandeur: THALES, 92400 Courbevoie (FR)
(72) Inventeur: LALLIER, Eric, 94230 CACHAN (FR)
(74) Mandataire: Priori, Enrico

(57) **Abrégé**

La présente invention se situe dans le domaine des sources lumineuses impulsionnelles dans le spectre infrarouge et concerne un système d'émission lumineuse impulsionnelle (3) comportant au moins un premier oscillateur laser infrarouge impulsionnel (L1) émettant à une longueur d'onde λ₁, un second oscillateur laser infrarouge impulsionnel (L2) susceptible d'être pompé à une dite longueur d'onde λ₁ et émettant à une longueur d'onde λ₂ et un oscillateur paramétrique optique (OPO) susceptible d'être pompé à ladite longueur d'onde λ₂, ledit premier oscillateur laser (L1) étant déporté dudit second oscillateur laser (L2) par une fibre optique de transport monomode (FT), caractérisé en ce que :
- ledit second oscillateur laser (L2) est un oscillateur laser à fibre ;
- la longueur et le dopage de ladite fibre dudit second oscillateur laser (L2) sont paramétrés pour qu'une première impulsion nanoseconde ou microseconde à ladite longueur d'onde λ₁ injectée dans ledit second oscillateur laser (L2) génère, par une commutation de gain, une seconde impulsion nanoseconde à ladite longueur d'onde λ₂, d'une durée inférieure à celle de ladite première impulsion.

## Description

L'invention concerne le domaine des sources lumineuses impulsionnelles dans le spectre infrarouge, réalisées à partir d'oscillateurs paramétriques optiques et d'oscillateurs laser.

Plus particulièrement, l'invention concerne les sources laser pour des applications de télédétection de molécules polluantes ou de gaz toxiques, d'illumination de cibles pour l'imagerie, ou de contre-mesures. Ces applications nécessitent des impulsions d'une durée typiquement comprise entre 0,1 ns et 1 µs, et présentant une puissance crête élevée, typiquement comprise entre 10 kW et 10 MW. Les sources laser concernées par l'invention comprennent un laser de pompage de type laser à solide ou laser à fibre émettant des impulsions dans le proche infrarouge. Ce laser est suivi d'un oscillateur paramétrique optique (OPO) constitué d'un cristal non-linéaire inséré dans une cavité résonnante qui permet de convertir le rayonnement proche infrarouge de la pompe en rayonnement infrarouge, typiquement de longueur d'onde supérieure à 2,5 µm.

Le ou les générateurs d'impulsions de pompage sont usuellement placés dans la tête optique d'émission de la source, ce qui pose un problème dans la mesure où cette solution suppose par exemple la réalisation d'un ensemble comportant une cavité oscillante incluant un milieu à gain, un modulateur électro-optique pour le régime d'impulsions et la stabilisation mécanique et thermique de ces composants. Ces contraintes ont un impact non négligeable sur le volume (typiquement supérieur à 100 cm³) et sur la consommation électrique de la tête d'émission de la source.

Une réalisation de ce type de générateur d'impulsions implique d'intégrer l'ensemble de l'électronique de pilotage au niveau de la tête d'émission et la gestion d'un transfert thermique important, dû à un rendement électro-optique de l'ordre de quelques pourcents.

Une autre réalisation de ce type de générateur d'impulsions, présentée par Wu, K. S., Ottaway, D., Munch, J., Lancaster, D. G., Bennetts, S., & Jackson, S. D. (2009) dans « Gain-switched holmium-doped fibre laser », Optics express, 17(23), 20872-20877, utilise une génération d'impulsions par commutation de gain. La commutation par le gain d'un oscillateur laser à fibre, en particulier d'un oscillateur laser à fibre dopée Ho³⁺ par un oscillateur laser à fibre Tm³⁺ y est démontrée.

On souhaite pouvoir minimiser l'encombrement, le volume, la consommation électrique et le nombre de servitudes au niveau de la tête d'émission de la source (par exemple dans le cas d'une utilisation sur le nez d'un avion). Une solution consiste à déporter tout où une partie de la source à l'aide d'une fibre optique afin de minimiser le volume au niveau du point d'émission de la source.

Malheureusement, les fibres monomodes en silice permettant le transport de puissance optique ne transmettent pas les longueurs d'onde supérieures à 2,5 µm et les fibres réalisées à partir de matériaux infrarouges sont encore loin d'être matures : il n'est donc pas possible de déporter entièrement la source infrarouge. Il est donc nécessaire d'intégrer l'OPO dans la tête optique d'émission, ce qui peut être réalisé de façon compacte (par exemple dans un volume de quelques dizaines de cm³), car un OPO est généralement constitué d'un cristal de quelques centimètres et de deux miroirs très proches constituant la cavité résonante.

Il serait souhaitable de déporter le système de pompage présent dans la tête optique, mais la propagation d'impulsions optiques de forte puissance crête dans une fibre monomode est limitée par l'apparition d'effets non-linéaires (auto-modulation de phase et mélange à quatre ondes) qui tendent à élargir le spectre optique des impulsions au-delà de ce qui est admissible pour l'efficacité de l'OPO. Ainsi, si on suppose un oscillateur laser de pompage émettant vers 2 µm, se propageant dans une fibre monomode avec un diamètre de mode de 20 µm, le seuil d'apparition d'effets non-linéaires néfastes est de l'ordre du kW crête pour une fibre de dix mètres. Cette valeur est insuffisante à la fois pour le pompage de l'OPO et pour son émission dans le cadre des applications décrites précédemment.

Grisard, A., Gutty, F., Lallier, E., & Gérard, B. (Octobre 2010, « Compact fiber laser-pumped mid-infrared source based on orientation-patterned gallium arsenide », Security+ Defence (pp. 783606-783606), International Society for Optics and Photonics), divulguent une méthode pour déporter un oscillateur laser pour le pompage primaire (pompage de l'oscillateur laser permettant de pomper l'OPO), lorsque l'oscillateur laser primaire émet en continu. L'émission continue peut être transportée par une fibre optique car sa puissance crête est faible. La tête optique comprend alors un module laser déclenché à base d'Ho³⁺:YAG pour la génération des impulsions et l'OPO pour la conversion infrarouge. Il comprend dans la partie déportée un laser à fibre dopée Tm³⁺ émettant un rayonnement continu à 1908 nm. Le rayonnement est transporté dans une fibre monomode jusqu'à la tête d'émission et sert à pomper le laser déclenché générant des impulsions nanosecondes à 2090 nm. La longueur d'onde de ces impulsions est ensuite partiellement convertie dans l'infrarouge par un OPO à base de cristal de GaAs à orientation périodique. Le pompage et l'émission de l'ion laser Ho³⁺ ayant lieu au sein de la même transition, le défaut quantique est faible et la dissipation thermique associée est minimisée. De même, la gestion thermique au niveau du cristal de GaAs est facilitée car celui-ci est peu absorbant. L'inconvénient est que cette approche reste trop encombrante et consomme trop car il faut malgré tout refroidir le cristal d'Ho³⁺:YAG et alimenter un modulateur acousto-optique.

L'idée à la base de l'invention est d'utiliser un laser impulsionnel déporté, émettant dans une fibre laser des impulsions nanosecondes relativement longues qui permettent de pomper un second laser dans la tête optique d'émission de la source fonctionnant en mode de commutation de gain. Ce mode permet au second oscillateur laser d'émettre des impulsions nanosecondes plus courtes et d'une puissance crête plus élevée.

L'invention a pour objet un système d'émission lumineuse impulsionnelle comportant au moins un premier oscillateur laser infrarouge impulsionnel émettant à une longueur d'onde λ₁, un second oscillateur laser infrarouge impulsionnel susceptible d'être pompé à une dite longueur d'onde λ₁ et émettant à une longueur d'onde λ₂ et un oscillateur paramétrique optique (OPO) susceptible d'être pompé à ladite longueur d'onde λ₂, ledit premier oscillateur laser étant déporté dudit second oscillateur laser par une fibre optique de transport monomode, caractérisé en ce que:
- ledit second oscillateur laser est un oscillateur laser à fibre;
- la longueur et le dopage de ladite fibre dudit second oscillateur laser sont paramétrés pour qu'une première impulsion nanoseconde ou microseconde à ladite longueur d'onde λ₁ injectée dans ledit second oscillateur laser génère, par une commutation de gain, une seconde impulsion nanoseconde à ladite longueur d'onde λ₂, d'une durée inférieure à celle de ladite première impulsion, et pour que la puissance crête d'une dite seconde impulsion soit strictement supérieure à la puissance crête d'une dite première impulsion.

Avantageusement, la longueur de la fibre monomode du système est supérieure ou égale à 5 mètres.

Avantageusement, le système est paramétré pour que ladite commutation de gain génère une dite seconde impulsion unique.

Avantageusement, le système est paramétré pour que la puissance crête desdites secondes impulsions soit supérieure ou égale à 10 kW et inférieure ou égale à 10 MW.

Avantageusement, le système est paramétré pour que le rapport de la puissance crête d'une dite seconde impulsion sur la puissance crête d'une dite première impulsion soit strictement supérieur à 2 et préférentiellement strictement supérieur à 5.

Avantageusement, le système est paramétré pour qu'une dite seconde impulsion soit d'une durée inférieure ou égale à la moitié de la durée d'une dite première impulsion et préférentiellement d'une durée inférieure ou égale au cinquième de la durée d'une dite première impulsion.

Avantageusement, une dite première impulsion du système a une durée comprise entre dix nanosecondes et une microseconde.

Avantageusement, ledit premier oscillateur laser du système est un laser à fibre.

Avantageusement, ladite fibre dudit premier oscillateur laser du système est dopée avec des ions choisis parmi des ions d'Erbium, d'Ytterbium, de Thulium, de Néodyme et d'Holmium.

Avantageusement, ladite fibre dudit second oscillateur laser du système est dopée avec des ions choisis parmi des ions d'Erbium, d'Ytterbium, de Thulium, de Néodyme et d'Holmium.

Avantageusement, le système comporte un couple constitué d'une part de l'élément des ions dopant de ladite fibre dudit premier oscillateur laser et d'autre part de l'élément des ions dopant de ladite fibre dudit second oscillateur laser, choisi parmi le Néodyme et Ytterbium, l'Erbium et Thulium et le Thulium et Holmium.

Avantageusement, le système comporte une section non guidée entre ledit second oscillateur laser et ledit oscillateur paramétrique optique, ainsi qu'un filtre accordable en longueur d'onde d'émission disposé dans ladite section non guidée.

Avantageusement, ledit filtre accordable du système est choisi parmi un réseau de diffraction, un filtre de Lyot et un filtre acousto-optique.

Avantageusement, ledit premier oscillateur laser du système comprend un système de pompage optique impulsionnel adapté pour générer des dites premières impulsions.

La présente invention a aussi pour objet un procédé d'émission d'impulsion lumineuse nanoseconde par ledit système, comprenant au moins les étapes consistant à :
a) générer une dite première impulsion nanoseconde ou microseconde lumineuse dudit premier laser ;
b) transmettre ladite première impulsion lumineuse jusqu'audit second oscillateur laser par au moins une dite fibre de transport optique monomode dans une gamme de puissance crête de ladite première impulsion impliquant un élargissement spectral de ladite première impulsion, en sortie de chaque dite fibre de transport, dont les bornes sont inclues dans la largeur spectrale d'absorption dudit second oscillateur optique laser;
c) injecter ladite première impulsion de chaque dite fibre de transport dans ledit second oscillateur laser de manière à obtenir par commutation de gain une dite seconde impulsion unique plus courte que ladite première impulsion ;
d) générer une troisième impulsion lumineuse en pompant ledit oscillateur paramétrique optique avec ladite seconde impulsion lumineuse.

Avantageusement, la durée de ladite première impulsion du procédé est comprise entre dix nanosecondes et une microseconde et la durée de ladite seconde impulsion est comprise entre une nanoseconde et cent nanosecondes.

La description suivante présente plusieurs exemples de réalisation de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés. Par souci de clarté, les mêmes éléments porteront les mêmes repères dans les différentes figures.

On appelle durée d'une impulsion laser la largeur à mi-hauteur de son profil d'intensité au cours du temps.

L'invention sera mieux comprise et d'autres avantages, détails et caractéristiques de celle-ci apparaîtront au cours de la description explicative qui suit, faite à titre d'exemple en référence aux dessins annexés dans lesquels :
- la figure 1 est une représentation schématique d'un système d'émission laser impulsionnel 1 ;
- la figure 2 présente le spectre d'absorption des ions Ho³⁺dans la silice ;
- la figure 3 présente les spectres d'émission des ions Tm³⁺ et Ho³⁺ dans la silice ;
- la figure 4 présente une simulation numérique du profil d'une des impulsions de pompe incidente et d'une impulsion laser émises à 2,1 µm dans un oscillateur laser L2 à fibre dopée Ho³⁺;
- la figure 5 présente une vue schématique d'une réalisation de l'invention permettant d'obtenir une émission infrarouge accordable en sortie de l'OPO ;
- la figure 6 présente une illustration des niveaux d'énergie donnant lieu à une émission laser dans une réalisation de l'invention.

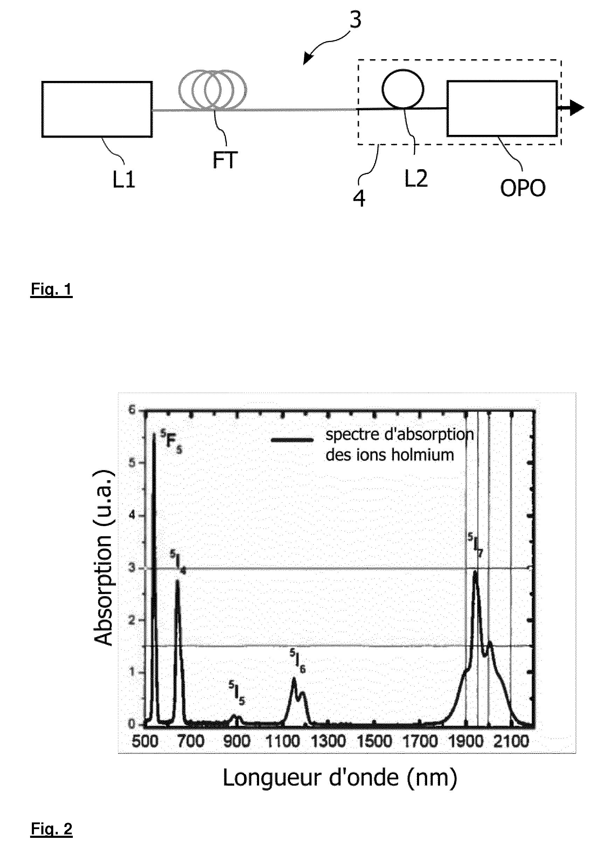

La figure 1 est une représentation schématique d'un système 3 d'émission laser impulsionnel 1 selon une réalisation de l'invention. Un premier oscillateur laser déporté L1 émet des impulsions nanosecondes dans une fibre de transport FT. De manière générale, la longueur d'une fibre de transport monomode FT est supérieure ou égale à 5 m et préférentiellement supérieure ou égale à 10 m. Cette fibre de transport FT est reliée à la tête optique 4. La tête optique 4 comporte un second oscillateur laser L2 et un oscillateur paramétrique optique OPO. Dans la réalisation de l'invention présentée dans la figure 1, la fibre de transport FT est directement reliée au second oscillateur laser L2 à fibre. Ce dernier est directement relié à l'oscillateur paramétrique optique OPO, qui émet des impulsions infrarouge.

La réalisation décrite a pour but de réduire considérablement le volume de l'oscillateur laser L2 de pompage de l'OPO compris dans la tête optique 4 par rapport à l'état de l'art. Cette réalisation propose aussi d'intégrer l'oscillateur laser L2 de pompage de l'OPO de manière monolithique à la fibre de transport FT, de simplifier la conception du système 3 et de minimiser les servitudes par un refroidissement passif, la présence d'une ou plusieurs cavités laser monolithiques et l'absence de composants électro-optiques.

L'oscillateur laser L1 est impulsionnel et peut être avantageusement pompé par une diode laser.

Dans une réalisation particulière de l'invention, l'oscillateur laser L2 intégré à la tête optique 4 est une cavité monolithique comportant une fibre monomode dopée Ho³⁺ aux extrémités de laquelle sont soudées des fibres optiques dans lesquelles sont inscrits des réseaux de Bragg réfléchissant à la longueur d'onde d'émission laser λ₂.

Le pompage de la fibre laser L2 est assuré par un laser L1 à fibre optique dopée Tm³⁺ monomode, déporté, émettant à une longueur d'onde λ₁ comprise entre 1,95-2 µm et fonctionnant en régime d'impulsions nanosecondes. Ce type de pompage permet d'obtenir une émission impulsionnelle sans faire appel à un modulateur et est appelé commutation par le gain. Il peut donner lieu à une impulsion unique si l'énergie de pompage est absorbée dans un temps plus court que le temps de construction de l'impulsion dans la cavité de l'oscillateur laser L2, ce dernier dépendant du gain et de la longueur de la cavité de l'oscillateur laser L2. Dans le cas d'un oscillateur laser à fibre typique, on peut montrer que ce temps est de l'ordre de quelques centaines de nanosecondes et qu'un pompage avec une impulsion d'une durée comprise entre 10 ns et 1 µs permet d'extraire une impulsion de l'ordre d'une dizaine de nanosecondes si la longueur de la cavité laser est suffisamment faible (sensiblement inférieure à un mètre), de sorte qu'il est possible d'obtenir un gain en terme de puissance crête. La possibilité d'utiliser des impulsions de pompage primaire de, par exemple, cent nanosecondes, pour générer, par exemple, une impulsion secondaire de dix nanosecondes, limite la puissance crête de l'impulsion transportée dans la fibre de transport FT et y repousse le seuil d'apparition des effets non-linéaires. Par exemple, la durée d'une impulsion en sortie de l'oscillateur laser L2 peut être inférieure ou égale à la moitié de la durée d'une impulsion en sortie de l'oscillateur laser L1 et préférentiellement inférieure ou égale à un cinquième de la durée d'une impulsion en sortie de l'oscillateur laser L1. Dans l'ensemble des réalisations de l'invention, le gain de la puissance crête d'une impulsion en sortie du second oscillateur laser L2 par rapport à la puissance crête d'une impulsion en sortie du premier oscillateur laser L1 est strictement supérieur à 1. Précisément, le rapport de la puissance crête d'une impulsion en sortie du second oscillateur laser L2 sur la puissance crête d'une impulsion en sortie du premier oscillateur laser L1 est strictement supérieur à 2, préférentiellement strictement strictement supérieur à 5 et préférentiellement strictement supérieur à 10. Ainsi, une émission d'impulsions en sortie du second oscillateur laser L2 est possible dans une gamme de puissances crête nécessaire aux applications précisées précédemment, inclues dans une gamme comprise entre 10 kW et 10 MW, tout en limitant et/ou en minimisant les effets non linéaires, l'élargissement spectral et/ou la déformation d'une impulsion parcourant la fibre de transport FT.

La figure 2 présente le spectre d'absorption des ions Ho³⁺ dans la silice. Dans l'exemple de réalisation présenté en figure 1, il est possible de tolérer un élargissement spectral conséquent de l'impulsion émise par source de pompage L1, lié au transport dans la fibre FT, car la largeur de la bande d'absorption d'Ho³⁺ dans la silice vers 1,95 µm est supérieure à 100 nm.

De manière plus générale et dans d'autres réalisations de l'invention, on peut choisir les paramètres du système pour que la transmission de l'impulsion émise par la source de pompage L1 implique un élargissement spectral, en sortie de la fibre de transport FT, tel que les bornes de cet élargissement spectral sont inclues dans la largeur spectrale d'absorption du second oscillateur optique laser L2.

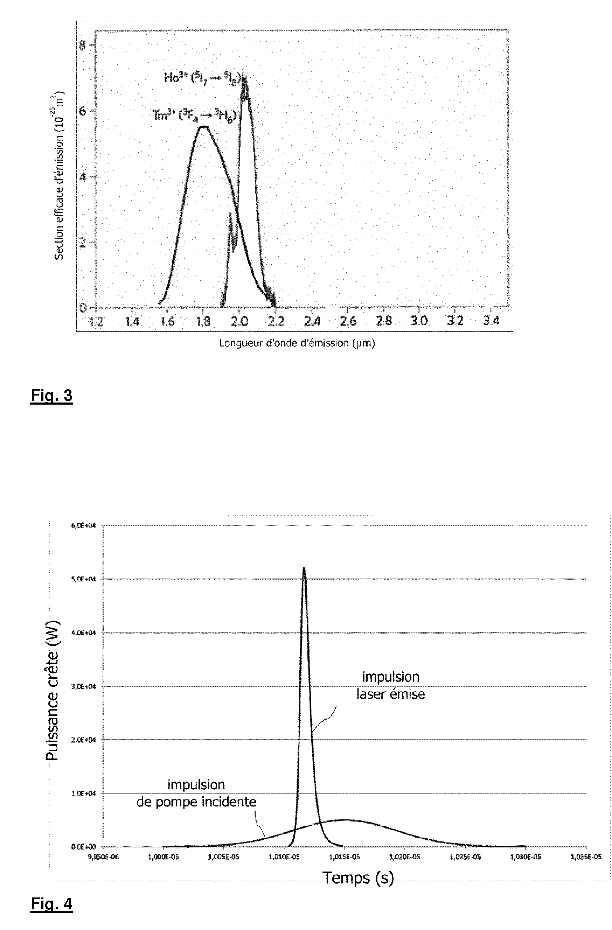

La figure 3 présente les spectres d'émission des ions Tm³⁺ et Ho³⁺ dans la silice. La bande de gain d'Ho³⁺ dans la silice est large, mais des miroirs de Bragg, très sélectifs, permettent de choisir la longueur d'onde d'émission de l'oscillateur laser L2 dans la bande de longueur d'onde typiquement entre 2,05 et 2,15 µm, et de garantir une faible largeur spectrale (inférieure à un nanomètre) compatible avec la largeur spectrale nécessaire pour le pompage d'OPO. Finalement, dans la mesure où le pompage vers 1,9-2 µm d'une fibre dopée Ho³⁺ est efficace (> 60%), et que l'énergie thermique dissipée est distribuée le long de la fibre (sur une longueur de l'ordre d'un mètre), un refroidissement passif est possible au moins pour un pompage de quelques dizaines de Watts. Dans une réalisation particulière de l'invention, on peut souder directement la fibre laser Ho³⁺ L2 au bout de la fibre de transport (FT) afin de minimiser le volume de la tête optique, comme présenté schématiquement dans la figure 1.

La figure 4 présente une simulation numérique du profil d'une des impulsions de pompe incidente et d'une impulsion laser émises à 2,1 µm dans un oscillateur laser L2 à fibre dopée Ho³⁺, dans le cadre d'une réalisation de l'invention présentée en figure 1. Les paramètres utilisés pour la simulation numérique sont les suivants :
- pompage de l'oscillateur laser L2 à la longueur d'onde λ₁=1950 nanomètres, avec des impulsions gaussiennes de puissance crête égale à 5 kW, d'une durée de 100 nanosecondes et avec un taux de répétition de 100 kHz,
- oscillateur laser fibre Ho³⁺ L2 d'une longueur de 0,5 mètres, avec un miroir d'entrée au coefficient de réflexion en intensité R = 100% à 2100 nanomètres et un miroir de sortie au coefficient de réflexion en intensité R = 20% à 2100 nm.
On obtient une puissance crête de l'impulsion laser émise supérieure à 40 kW et une durée de l'impulsion laser émise inférieure à 10 ns. Le gain en puissance-crête est alors sensiblement de 8. Le rendement de pompage simulé est sensiblement de 80% et la puissance thermique à dissiper est sensiblement de 10 W. On constate dans cette simulation que ce mode de réalisation permet au second oscillateur laser L2 d'émettre une impulsion nanoseconde significativement plus courte que l'impulsion de pompe incidente.

Les réalisations proposées de la figure 1 à la figure 4 permettent avantageusement de réduire le volume occupé par la source dans la tête d'émission 4 et de le rendre inférieur à 100 cm³, de faciliter la gestion thermique par rapport à l'état de l'art ainsi que d'éviter l'utilisation de la modulation électro-optique.

De plus, ces réalisations permettent avantageusement de générer des impulsions avec une cavité laser monolithique sans risque de désalignement.

Avantageusement, le matériau laser utilisé dans les réalisations décrites précédemment permet une émission de l'oscillateur laser L2 dans la gamme de longueur d'onde 2,05 - 2,15 µm par choix de la longueur d'onde résonante des miroirs de Bragg.

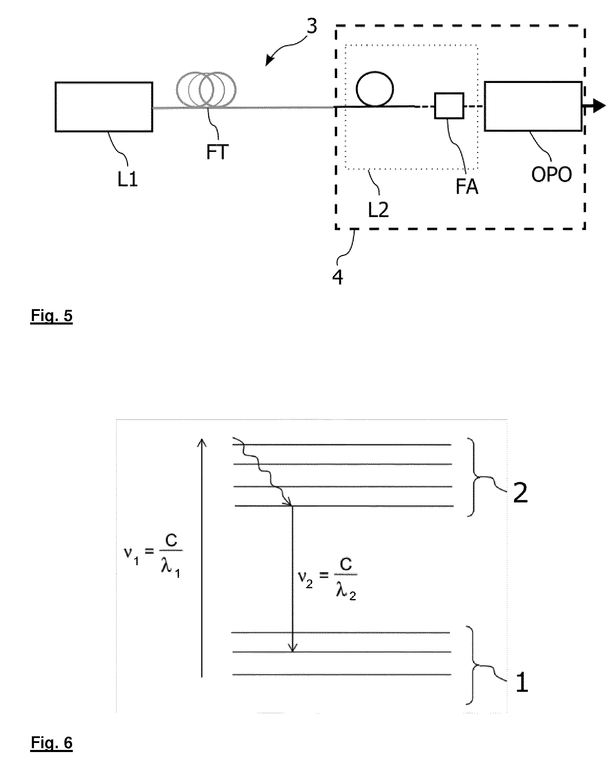

La figure 5 présente une vue schématique d'une réalisation de l'invention permettant d'obtenir une émission infrarouge accordable en sortie de l'OPO. Dans ce cas, le laser à fibre L2 Ho³⁺ n'est plus monolithique et comporte une section non guidée dans laquelle on dispose un filtre accordable FA permettant la sélection de la longueur d'onde d'émission λ₂. Dans des réalisations différentes de l'invention, ce composant peut être un réseau de diffraction, un filtre de Lyot, un filtre acousto-optique, ou tout autre moyen connu de sélection de la longueur d'onde.

La figure 6 présente une illustration des niveaux d'énergie donnant lieu à une émission laser dans une réalisation de l'invention. Ces niveaux sont présents dans une matrice de silice dopée par l'ion terre rare de la réalisation de l'invention. Dans le cas du second oscillateur laser L2, la figure 6 présente deux niveaux d'énergie, chacun des niveaux étant divisés en plusieurs sous niveaux ayant un même nombre quantique orbital : le premier ensemble 1 correspondant à l'ensemble contenant les niveaux d'énergie fondamentaux et le second ensemble 2 contenant des niveaux d'énergie atteints lors du pompage du milieu actif dudit oscillateur laser. Dans un mode de réalisation de l'invention, le niveau laser supérieur correspond à l'un des sous-niveaux de plus faible énergie de l'ensemble 2, et la longueur d'onde de pompage λ₁ est choisie pour exciter un sous-niveau d'énergie plus élevée de l'ensemble 2. Ainsi, la désexcitation non radiative vers le niveau laser supérieur est extrêmement rapide, ce qui permet la génération d'impulsions laser brèves. Pour atteindre ce régime de fonctionnement, la longueur d'onde λ₁ doit être inférieure à λ₂.

Plusieurs couples d'ions sont adaptés à ce choix. Dans des réalisations particulières de l'invention, on peut par exemple choisir les couples constitués d'une part de l'élément des ions dopant de la fibre du premier oscillateur laser L1 et d'autre part de l'élément des ions dopant de ladite fibre dudit second oscillateur laser (L2) parmi les couples {Néodyme, Ytterbium}, {Erbium, Thulium} et {Thulium, Holmium}.

## Revendications

1. Système d'émission lumineuse impulsionnelle (3) comportant au moins un premier oscillateur laser infrarouge impulsionnel (L1) émettant à une longueur d'onde λ₁, un second oscillateur laser infrarouge impulsionnel (L2) susceptible d'être pompé à une dite longueur d'onde λ₁ et émettant à une longueur d'onde λ₂ et un oscillateur paramétrique optique (OPO) susceptible d'être pompé à ladite longueur d'onde λ₂, ledit premier oscillateur laser (L1) étant déporté dudit second oscillateur laser (L2) par une fibre optique de transport monomode (FT), **caractérisé en ce que** :
- ledit second oscillateur laser (L2) est un oscillateur laser à fibre ;
- la longueur et le dopage de ladite fibre dudit second oscillateur laser (L2) sont paramétrés pour qu'une première impulsion nanoseconde ou microseconde à ladite longueur d'onde λ₁ injectée dans ledit second oscillateur laser (L2) génère, par une commutation de gain, une seconde impulsion nanoseconde à ladite longueur d'onde λ₂, d'une durée inférieure à celle de ladite première impulsion, et pour que la puissance crête d'une dite seconde impulsion soit strictement supérieure à la puissance crête d'une dite première impulsion.

2. Système selon la revendication précédente dans lequel la longueur de ladite fibre de transport monomode FT est supérieure ou égale à 5 mètres.

3. Système selon l'une des revendications précédentes paramétré pour que ladite commutation de gain génère une dite seconde impulsion unique.

4. Système selon l'une des revendications précédentes paramétré pour que la puissance crête desdites secondes impulsions soit supérieure ou égale à 10 kW et inférieure ou égale à 10 MW.

5. Système selon l'une des revendications précédentes paramétré pour que le rapport de la puissance crête d'une dite seconde impulsion sur la puissance crête d'une dite première impulsion soit strictement supérieur à 2 et préférentiellement strictement supérieur à 5.

6. Système selon l'une des revendications précédentes paramétré pour qu'une dite seconde impulsion nanoseconde soit d'une durée inférieure ou égale à la moitié de la durée d'une dite première impulsion et préférentiellement inférieure ou égale au cinquième de la durée d'une dite première impulsion.

7. Système selon l'une des revendications précédentes dans lequel une dite première impulsion a une durée comprise entre dix nanosecondes et une microseconde.

8. Système selon l'une des revendications précédentes dans lequel ledit premier oscillateur laser (L1) est un laser à fibre.

9. Système selon l'une des revendications précédentes dans lequel ladite fibre dudit premier oscillateur laser (L1) est dopée avec des ions choisis parmi des ions d'Erbium, d'Ytterbium, de Thulium, de Néodyme et d'Holmium.

10. Système selon l'une des revendications précédentes dans lequel ladite fibre dudit second oscillateur laser (L2) est dopée avec des ions choisis parmi des ions d'Erbium, d'Ytterbium, de Thulium, de Néodyme et d'Holmium.

11. Système selon l'une des revendications précédentes dans lequel le couple constitué d'une part de l'élément des ions dopant de ladite fibre dudit premier oscillateur laser (L1) et d'autre part de l'élément des ions dopant de ladite fibre dudit second oscillateur laser (L2) est choisi parmi le Néodyme et Ytterbium, l'Erbium et Thulium et le Thulium et Holmium.

12. Système selon l'une des revendications précédentes comportant une section non guidée entre ledit second oscillateur laser (L2) et ledit oscillateur paramétrique optique (OPO), ainsi qu'un filtre accordable (FA) en longueur d'onde d'émission disposé dans ladite section non guidée.

13. Système selon la revendication 12 dans lequel ledit filtre accordable (FA) est choisi parmi un réseau de diffraction, un filtre de Lyot et un filtre acousto-optique.

14. Système selon l'une des revendications précédentes dans lequel ledit premier oscillateur laser (L1) comprend un système de pompage optique impulsionnel adapté pour générer des dites premières impulsions.

15. Procédé d'émission d'impulsion lumineuse nanoseconde par un système selon l'une des revendications précédentes, comprenant au moins les étapes consistant à :
a) générer une dite première impulsion nanoseconde ou microseconde lumineuse dudit premier laser (L1);
b) transmettre ladite première impulsion lumineuse jusqu'audit second oscillateur laser (L2) par au moins une dite fibre de transport optique monomode (FT) dans une gamme de puissance crête de ladite première impulsion impliquant un élargissement spectral de ladite première impulsion, en sortie de chaque dite fibre de transport (FT), dont les bornes sont inclues dans la largeur spectrale d'absorption dudit second oscillateur optique laser (L2);
c) injecter ladite première impulsion de chaque dite fibre de transport (FT) dans ledit second oscillateur laser (L2) de manière à obtenir par commutation de gain une dite seconde impulsion unique plus courte que ladite première impulsion ;
d) générer une troisième impulsion lumineuse en pompant ledit oscillateur paramétrique optique (OPO) avec ladite seconde impulsion lumineuse.

16. Procédé selon la revendication 15 dans lequel la durée de ladite première impulsion est comprise entre dix nanosecondes et une microseconde et dans lequel la durée de ladite seconde impulsion est comprise entre une nanoseconde et cent nanosecondes.
